(19) Europäisches Patentamt
European Patent Office
Office européen des brevets

(11) **EP 2 181 898 A1**

(12) **EUROPEAN PATENT APPLICATION**
published in accordance with Art. 153(4) EPC

(43) Date of publication:
**05.05.2010 Bulletin 2010/18**

(51) Int Cl.:
**B60R 21/00** *(2006.01)*   **B60R 1/00** *(2006.01)*
**G06T 1/00** *(2006.01)*   **G06T 7/20** *(2006.01)*
**H04N 7/18** *(2006.01)*

(21) Application number: **08829242.0**

(22) Date of filing: **19.08.2008**

(86) International application number:
**PCT/JP2008/064723**

(87) International publication number:
**WO 2009/031400 (12.03.2009 Gazette 2009/11)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.09.2007 JP 2007227635**

(71) Applicant: **Sanyo Electric Co., Ltd.**
**Moriguchi-shi**
**Osaka 570-8677 (JP)**

(72) Inventor: **ISHII, Yohei**
**Osaka-Shi**
**Osaka 563-0014 (JP)**

(74) Representative: **Glawe, Delfs, Moll**
**Patent- und Rechtsanwälte**
**Postfach 26 01 62**
**80058 München (DE)**

(54) **DRIVING ASSISTANCE SYSTEM AND CONNECTED VEHICLES**

(57)   A tractor and a trailer are connected together and a camera is installed on the trailer side of the connected vehicles. The camera captures images behind the trailer. A driving assistance system projects the captured images on bird's-eye view coordinates parallel with a road surface to convert the images into bird's-eye view images and obtains on the bird's-eye view coordinates an optical flow of a moving image composed of the captured images. The connection angle between the tractor and the trailer is estimated based on the optical flow and on movement information on the tractor, and further, a predicted movement trajectory of the trailer is obtained from both the connection angle and the movement information on the tractor. The predicted movement trajectory is overlaid on the bird's-eye view images and the resulting image is outputted to a display device.

FIG.7

```
              START
S11   ACQUIRE SHOT IMAGES AT
      DIFFERENT TIME POINTS
S12   DETERMINE OPTICAL FLOW ON
      BIRD'S-EYE VIEW COORDINATE
      SYSTEM
S13   DETERMINE MOVEMENT
      INFORMATION OF TRAILER FROM
      OPTICAL FLOW
S14   DETECT MOVEMENT INFORMATION
      OF TRACTOR
S15   ESTIMATE COUPLING ANGLE
S16   DERIVE PREDICTED MOVEMENT
      COURSE OF TRAILER
S17   USING PREDICTED MOVEMENT
      COURSE, GENERATE DISPLAY
      IMAGE
              END
```

EP 2 181 898 A1

## Description

### Technical Field

The present invention relates to a driving assistance system for assisting the driving of an articulated vehicle (coupled, or connected vehicles), and also relates to an articulated vehicle employing such a driving assistance system.

### Background Art

In recent years, with increasing awareness for safety, more and more vehicles have come to be equipped with a camera. This tendency applies not only to ordinary passenger vehicles but also to industrial vehicles. In particular, articulated vehicles, composed of a tractor and a trailer towed by the tractor, are comparatively difficult to drive, and thus they benefit well from driving assistance using a camera. In this type of articulated vehicle, the trailer can swivel about a coupling as a pivot, and this makes it difficult for the driver to recognize how the rear end of the trailer moves as the tractor moves.

Under this background, there have been proposed several technologies for assisting the driving of articulated vehicles by use of a camera. For example, Patent Document 1 listed below discloses a technology according to which, with a camera installed at the rear of a towing vehicle and another at the rear of a towed vehicle, the predicted movement course of the towed vehicle is determined and displayed in a form superimposed on an image behind the towed vehicle. Disadvantageously, however, this technology absolutely requires two cameras, leading to an expensive system as a whole.

Patent Document 1: JP-2006-256544

### Disclosure of the Invention

### Problems to be Solved by the Invention

An object of the present invention is therefore to provide a driving assistance system that can assist the driving of a vehicle inexpensively and satisfactorily. Another object of the present invention is to provide an articulated vehicle employing such a driving assistance system.

### Means for Solving the Problem

To achieve the above objects, a first driving assistance system according to the invention is configured as follows: a driving assistance system which includes a camera provided, in an articulated vehicle composed of a first vehicle and a second vehicle coupled to the first vehicle, on the second vehicle to shoot behind the second vehicle, and which acquires a plurality of chronologically ordered shot images from the camera and outputs a display image generated from the shot images to a display device, is characterized by the provision of: a motion detecting portion which derives an optical flow of the moving image formed by the plurality of shot images; a coupling angle estimating portion which estimates the coupling angle of the first and second vehicles based on the optical flow and on movement information of the first vehicle fed to the coupling angle estimating portion; and a movement course estimating portion which derives a predicted movement course of the second vehicle based on the coupling angle and on the movement information of the first vehicle. Here, the display image is generated by superimposing a sign based on the predicted movement course on an image based on the shot images.

This permits a driver to confirm the predicted movement course of the second vehicle on an image, thereby assisting his driving operation. Moreover, that can be achieved inexpensively, because it suffices to provide the second vehicle with a camera.

Specifically, for example, the first driving assistance system is further characterized by the provision of: a coordinate transforming portion which transforms the plurality of shot images to a plurality of bird's-eye view images by projecting the shot images onto a predetermined bird's-eye view coordinate system. Here, the optical flow derived by the motion detecting portion is an optical flow on the bird's-eye view coordinate system.

Specifically, for example, the first driving assistance system is further **characterized in that** the movement information of the first vehicle includes information representing the movement direction and movement speed of the first vehicle, and that the coupling angle estimating portion derives a vector representing the movement direction and movement amount of the first vehicle on the bird's-eye view coordinate system based on the movement information of the first vehicle, and estimates the coupling angle based on the vector and on the optical flow.

Specifically, for example, the first driving assistance system is further characterized by the provision of: an indicating portion which gives, to outside, an indication according to the result of comparison of the estimated coupling angle with a predetermined threshold angle.

To achieve the above objects, a second driving assistance system according to the invention is configured as follows: a driving assistance system which includes a camera provided, in an articulated vehicle composed of a first vehicle and a second vehicle coupled to the first vehicle, on the second vehicle to shoot behind the second vehicle, and which acquires a plurality of chronologically ordered shot images from the camera and outputs a display image generated from the shot images to a display device, is characterized by the provision of: a motion detecting portion which derives an optical flow of the moving image formed by the plurality of shot images; and a movement direction estimating portion which estimates the movement direction of the second vehicle based on the optical flow. Here, the result of estimation by the movement direction estimating portion is reflected in the display image.

This permits a driver to confirm the movement direction of the second vehicle on an image, thereby assisting his driving operation. Moreover, that can be achieved inexpensively, because it suffices to provide the second vehicle with a camera.

Specifically, for example, the second driving assistance system is further characterized by the provision of: a coordinate transforming portion which transforms the plurality of shot images to a plurality of bird's-eye view images by projecting the shot images onto a predetermined bird's-eye view coordinate system. Here, the optical flow derived by the motion detecting portion is an optical flow on the bird's-eye view coordinate system.

Specifically, for example, the second driving assistance system is further characterized by the provision of: a coupling angle estimating portion which estimates a coupling angle of the first and second vehicles based on the optical flow and on movement information of the first vehicle fed to the coupling angle estimating portion. Here, the result of estimation of the coupling angle is reflected in the display image.

Specifically, for example, the second driving assistance system is further **characterized in that** the movement information of the first vehicle includes information representing the movement direction and movement speed of the first vehicle, and that the coupling angle estimating portion derives a vector representing the movement direction and movement amount of the first vehicle on the bird's-eye view coordinate system based on the movement information of the first vehicle, and estimates the coupling angle based on the vector and on the optical flow.

Specifically, for example, the second driving assistance system is further characterized by the provision of: an indicating portion which gives, to outside, an indication according to the result of comparison of the estimated coupling angle with a predetermined threshold angle.

To achieve the above objects, an articulated vehicle according to the invention is characterized by being composed of a first vehicle and a second vehicle coupled to the first vehicle, and being provided with any of the driving assistance systems described above.

**Advantages of the Invention**

According to the present invention, it is possible to assist the driving of a vehicle inexpensively and satisfactorily.

The significance and benefits of the invention will be clearer from the following description of its embodiments. It should however be understood that these embodiments are merely examples of how the invention is implemented, and that the meanings of the terms used to describe the invention and its features are not limited to the specific ones in which they are used in the description of the embodiments.

**Brief Description of Drawings**

[Fig. 1] is a configuration block diagram of a driving assistance system embodying the invention.
[Fig. 2] is an external side view of an articulated vehicle on which the driving assistance system in Fig. 1 is installed.
[Fig. 3] is an external side view of an articulated vehicle on which the driving assistance system in Fig. 1 is installed.
[Fig. 4] is a plan view of the articulated vehicle of Fig. 2 as seen from above (when the coupling angle is 0 °).
[Fig. 5] is a plan view of the articulated vehicle of Fig. 2 as seen from above (when the coupling angle is not 0 °).
[Fig. 6] is a diagram showing a relationship among a camera coordinate system XYZ, a camera image-sensing plane S coordinate system $X_{bu}Y_{bu}$, and a world coordinate system $X_wY_wZ_w$ in an embodiment of the invention.
[Fig. 7] is a flow chart showing a flow of operation for generating a display image according to Example 1 of the invention.
[Fig. 8] is a plan view of an articulated vehicle and the road surface around it as seen from above according to Example 1 of the invention.
[Figs. 9 (a) and (b)] are diagrams showing shot images at time points t1 and t2 according to Example 1 of the invention.
[Figs. 10 (a) and (b)] are diagrams showing bird's-eye view images at time points t1 and t2 according to Example 1 of the invention.

[Fig. 11] is a diagram showing an image having the two bird's-eye view images in Figs. 10(a) and (b) overlaid on each other according to Example 1 of the invention.

[Fig. 12] is a diagram showing a relationship between a vector ($V_A$) corresponding to the movement information of a tractor and a vector ($V_B$) corresponding to the movement information of a trailer according to Example 1 of the invention.

[Fig. 13] is a diagram showing an example of a display image according to Example 1 of the invention.

[Fig. 14] is a diagram showing an example of a display image according to Example 3 of the invention.

[Fig. 15] is a diagram showing an example of a display image according to Example 4 of the invention.

[Fig. 16] is a diagram showing another example of a display image according to Example 4 of the invention.

[Fig. 17] is a diagram in illustration of a method for deriving a predicted movement course of a trailer according to Example 5 of the invention.

[Fig. 18] is a diagram in illustration of a method for deriving a predicted movement course of a trailer according to Example 5 of the invention.

[Fig. 19] is a functional block diagram of the image processor in Fig. 1 according to Example 6 of the invention.

[Fig. 20] is a diagram showing a modified example of the functional block diagram in Fig. 19 according to Example 6 of the invention.

**List of Reference Symbols**

| | |
|---|---|
| 1 | camera |
| 2 | image processor |
| 3 | display device |
| 10 | articulated vehicle |
| 11 | tractor |
| 12 | trailer |
| 14 | coupling |
| 121, 122, 131, 132 | vehicle guide lines |

**Best Mode for Carrying Out the Invention**

Hereinafter, embodiments of the present invention will be described specifically with reference to the accompanying drawings. Among different drawings referred to in the course of description, the same parts are identified by the same reference signs, and in principle no overlapping description of the same parts will be repeated. Before the description of specific practical examples, namely Examples 1 to 6, first, such features as are common to, or referred to in the description of, different practical examples will be described.

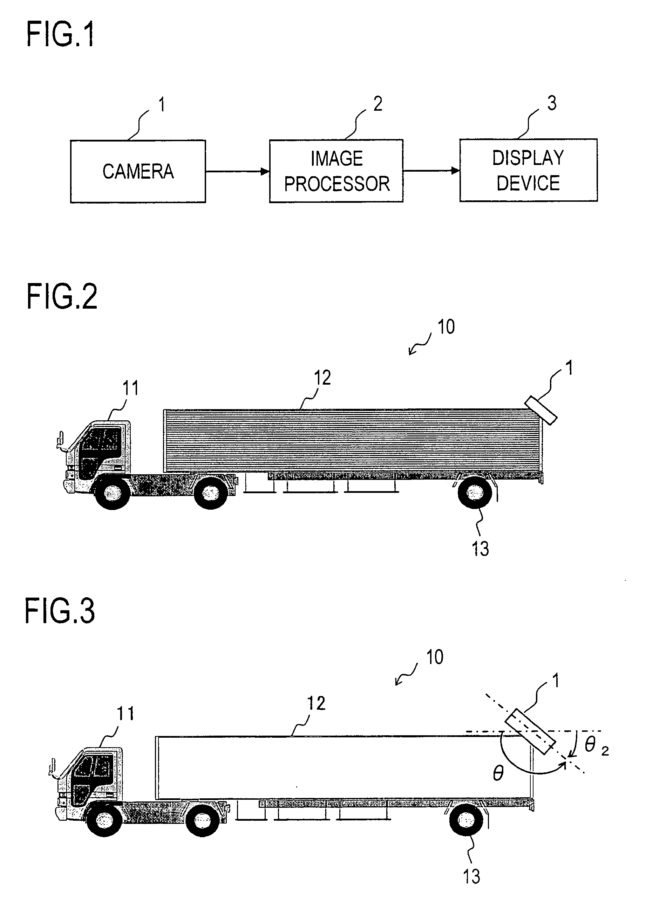

Fig. 1 is a configuration block diagram of a driving assistance system embodying the invention. The driving assistance system in Fig. 1 is provided with a camera 1, an image processor 2, and a display device 3. The camera 1 performs shooting, and outputs a signal representing the image obtained by the shooting to the image processor 2. The image processor 2 generates from the image obtained from the camera 1 a display image. The image processor 2 outputs a video signal representing the generated display image to the display device 3, and according to the video signal fed to it, the display device 3 displays the display image as video.

The image as it is obtained by the shooting by the camera 1 is often subject to lens distortion. Accordingly, the image processor 2 applies lens distortion correction to the image as it is obtained by the shooting by the camera 1, and generates the display image based on the image after lens distortion correction. In the following description, the image after lens distortion correction is called the shot image. In a case where no lens distortion correction is needed, the image as it is obtained by the shooting by the camera 1 is itself the shot image. The shot image may be read as the camera image.

Fig. 2 is an exterior side view of an articulated vehicle 10 on which the driving assistance system in Fig. 1 is installed. The articulated vehicle 10 is composed of a tractor 11 and a trailer 12 coupled to and towed by the tractor 11. The reference sign 13 indicates wheels provided on the trailer 12. The wheels 13 are ones generally called the rear wheels of the trailer 12. There are provided two of the wheels 13, one in the right side of the trailer 12 and the other in the left side of the trailer 12. The camera 1 is installed at the top end of the rear face of the trailer 12, and shoots the surroundings of the trailer 12.

The articulated vehicle 10 is placed on a road surface and travels on it. In the following description, it is assumed that the road surface is parallel to the horizontal plane. It is also assumed that what is referred to simply as a "height" is a height relative to the road surface. In the embodiment under discussion, the ground surface is synonymous with the road surface. Moreover, as is usual in a discussion of vehicles, the direction looking from the trailer 12 to the tractor 11 will be referred to as the front direction, and the direction looking from the tractor 11 to the trailer 12 will be referred to as the rear direction.

Used as the camera 1 is, for example, a camera using a CCD (charge-coupled device) or a camera using a CMOS (complementary metal oxide semiconductor) image sensor. The image processor 2 comprises, for example, an integrated circuit. The display device 3 comprises a liquid crystal display panel or the like. A display device as is incorporated in a car navigation system or the like may be shared as the display device 3 in the driving assistance system. The image processor 2 may be incorporated in a car navigation system as part of it. The image processor 2 and the display device 3 are installed, for example, near the driver's seat inside the tractor 11.

Like Fig. 2, Fig. 3 is an exterior side view of the articulated vehicle 10. In Fig. 3, however, to manifestly show the inclination angle of the camera 1, the camera 1 is illustrated in exaggerated size, and the trailer 12 with a different pattern than in Fig. 2. The camera 1 is installed so as to point rearward of the trailer 12, obliquely downward, so that the field of view of the camera 1 covers the road surface and any solid object located behind the trailer 12. With the horizontal plane, the optical axis of the camera 1 forms two angles, represented by $\theta$ and $\theta_2$, respectively, in Fig. 3. The angle $\theta_2$ is generally called angle of depression, or dip. Take now the angle $\theta$ as the inclination angle of the camera 1 relative to the horizontal plane. Then $90° < \theta < 180°$ and simultaneously $\theta + \theta_2 = 180°$ hold.

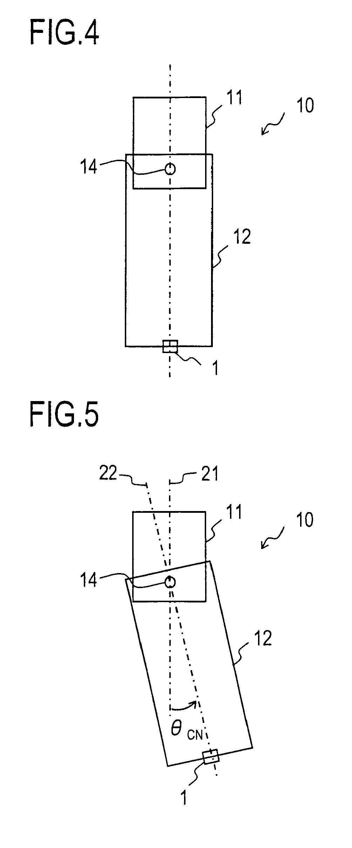

Figs. 4 and 5 are each a plan view of the articulated vehicle 10 as seen from above. In Figs. 4 and 5, for the sake of simple illustration, the tractor 11 and the trailer 12 are each represented by a simple rectangle. Fig. 4 is a plan view in a case where the angle formed by the tractor 11 and the trailer 12 (hereinafter referred to as the "coupling angle") is equal to 0°, and Fig. 5 is a plan view in a case where the coupling angle is not equal to 0°. When the coupling angle is equal to 0°, the tractor 11 and the trailer 12 align in a straight line (the bodies of the tractor 11 and the trailer 12 align in a straight line).

The reference sign 14 indicates the coupling (pivot) between the tractor 11 and the trailer 12. At the coupling 14, the trailer 12 is coupled to the tractor 11. About the coupling 14 as a pivot, the trailer 12 swivels relative to the tractor 11. When the tractor 11 and the trailer 12 are projected onto a horizontal two-dimensional plane, on this plane, the angle formed by the center line 21 through the body of the tractor 11 and the center line 22 through the body of the trailer 12 corresponds to the above-mentioned coupling angle, and this coupling angle is represented by $\theta_{CN}$. Here, the center lines 21 and 22 are center lines parallel to the traveling direction of the articulated vehicle 10 when it is traveling straight ahead.

A coupling angle $\theta_{CN}$ that occurs when, with the tractor 11 and the trailer 12 viewed from above, the trailer 12 swivels counter-clockwise about the coupling 14 is defined to be positive. Accordingly, a coupling angle $\theta_{CN}$ that occurs when the articulated vehicle 10 having been traveling straight ahead is about to turn right is positive.

[Method for generating a bird's-eye view image]

The image processor 2 in Fig. 1 is provided with a function of transforming the shot image to a bird's-eye view image by coordinate transformation. The coordinate transformation for generating the bird's-eye view image from the shot image is called "bird's-eye transformation." A method for such bird's-eye transformation will now be described.

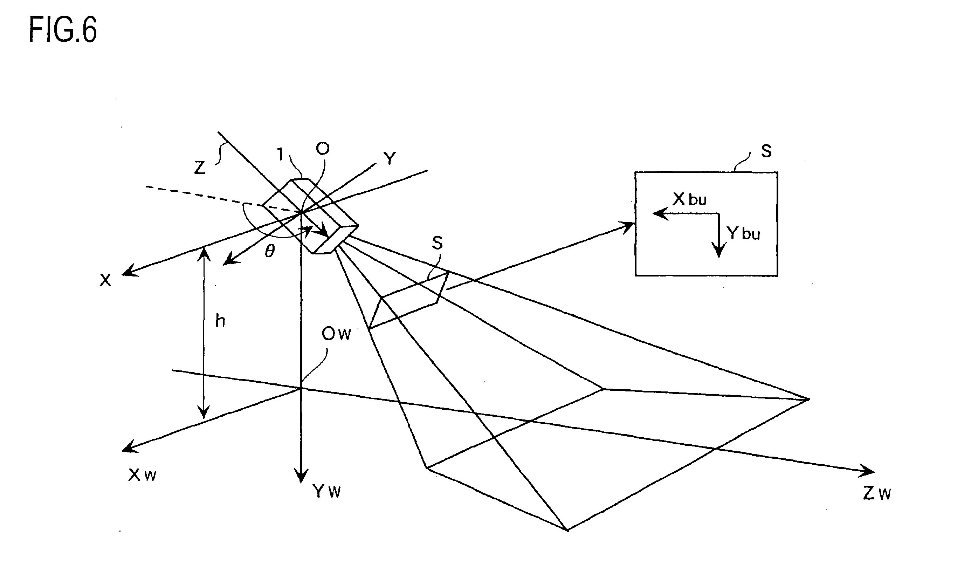

Fig. 6 shows a relationship among a camera coordinate system XYZ, a coordinate system of the image-sensing plane S of the camera 1 (a camera image-sensing plane S coordinate system) $X_{bu}Y_{bu}$, and a world coordinate system $X_wY_wZ_w$ including a two-dimensional ground surface coordinate system $X_wZ_w$. The coordinate system $X_{bu}Y_{bu}$ is the coordinate system on which the shot image is defined.

The camera coordinate system XYZ is a three-dimensional coordinate system having X, Y, and Z axes as its coordinate axes. The image-sensing plane S coordinate system $X_{bu}Y_{bu}$ is a two-dimensional coordinate system having $X_{bu}$ and $Y_{bu}$ axes. The two-dimensional ground surface coordinate system $X_wZ_w$ is a two-dimensional coordinate system having $X_w$ and $Z_w$ axes. The world coordinate system $X_wY_wZ_w$ is a three-dimensional coordinate system having $X_w$, $Y_w$, and $Z_w$ axes as its coordinate axes.

In the following description, the camera coordinate system XYZ, the image-sensing plane S coordinate system $X_{bu}Y_{bu}$, the two-dimensional ground surface coordinate system $X_wZ_w$, and the world coordinate system $X_wY_wZ_w$ are sometimes abbreviated to the camera coordinate system, the image-sensing plane S coordinate system, the two-dimensional ground surface coordinate system, and the world coordinate system respectively.

In the camera coordinate system XYZ, the optical center of the camera 1 is taken as origin O, Z axis is aligned with the optical axis, X axis is defined to be perpendicular to Z axis and parallel to the ground surface, and Y axis is defined to be perpendicular to both Z and X axes. In the image-sensing plane S coordinate system $X_{bu}Y_{bu}$, the center of the image-sensing plane S is taken as the origin, $X_{bu}$ axis is aligned with the lateral (width) direction of the image-sensing plane S, and $Y_{bu}$ axis is aligned with the longitudinal (height) direction of the image-sensing plane S.

In the world coordinate system $X_wY_wZ_w$, the intersection between the plumb line passing through origin O of the camera coordinate system XYZ and the ground surface is taken as origin $O_w$, $Y_w$ axis is defined to be perpendicular to the ground surface, $X_w$ axis is defined to be parallel to X axis of the camera coordinate system XYZ, and $Z_w$ axis is defined to be perpendicular to both $X_w$ and $Y_w$ directions.

The amount of translational displacement between $X_w$ axis and X axis equals h, and the direction of this translational displacement is the plumb line direction. The obtuse angle formed by $Z_w$ axis and Z axis is equal to the inclination angle θ. The values of h and θ are previously set and fed to the image processor 2.

The coordinates (coordinate values) of a pixel in the camera coordinate system XYZ are represented by (x, y, z). The symbols x, y, and z represent the X-, Y-, and Z-axis components, respectively, in the camera coordinate system XYZ.

The coordinates of a pixel in the world coordinate system $X_w Y_w Z_w$ are represented by $(x_w, y_w, z_w)$. The symbols $x_w$, $y_w$, and $z_w$ represent the $X_w$-, $Y_w$-, and $Z_w$-axis components, respectively, in the world coordinate system $X_w Y_w Z_w$.

The coordinates of a pixel in the two-dimensional ground surface coordinate system $X_w Z_w$ are represented by $(x_w, z_w)$. The symbols $x_w$ and $z_w$ represent the $X_w$- and $Z_w$-axis components, respectively, in the two-dimensional ground surface coordinate system $X_w Z_w$, and these are equal to the $X_w$- and $Z_w$-axis components in the world coordinate system $X_w Y_w Z_w$. The coordinates of a pixel in the image-sensing plane S coordinate system $X_{bu} Y_{bu}$ are represented by $(x_{bu}, y_{bu})$. The symbols $x_{bu}$ and $y_{bu}$ represent the $X_{bu}$- and $Y_{bu}$-axis components, respectively, in the image-sensing plane S coordinate system $X_{bu} Y_{bu}$.

A transformation formula between coordinates (x, y, z) in the camera coordinate system XYZ and coordinates $(x_w, y_w, z_w)$ in the world coordinate system $X_w Y_w Z_w$ is given by (1) below.

[Formula 1]

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} x_w \\ y_w \\ z_w \end{bmatrix} + \begin{bmatrix} 0 \\ h \\ 0 \end{bmatrix} \right\} \tag{1}$$

Here, let the focal length of the camera 1 be f. Then, a transformation formula between coordinates $(x_{bu}, y_{bu})$ in the image-sensing plane S coordinate system $X_{bu} Y_{bu}$ and coordinates (x, y, z) in the camera coordinate system XYZ is given by (2) below.

[Formula 2]

$$\begin{bmatrix} x_{bu} \\ y_{bu} \end{bmatrix} = \begin{bmatrix} f\dfrac{x}{z} \\ f\dfrac{y}{z} \end{bmatrix} \tag{2}$$

Formulae (1) and (2) above give a transformation formula, (3) below, between coordinates $(x_{bu}, y_{bu})$ in the image-sensing plane S coordinate system $X_{bu} Y_{bu}$ and coordinates $(x_w, z_w)$ in the two-dimensional ground surface coordinate system $X_w Z_w$.

[Formula 3]

$$\begin{bmatrix} x_{bu} \\ y_{bu} \end{bmatrix} = \begin{bmatrix} \dfrac{fx_w}{h\sin\theta + z_w\cos\theta} \\ \dfrac{(h\cos\theta - z_w\sin\theta)f}{h\sin\theta + z_w\cos\theta} \end{bmatrix} \tag{3}$$

Though not illustrated in Fig. 6, a bird's-eye view coordinate system $X_{au}Y_{au}$ is also defined as a coordinate system for the bird's-eye view image. The bird's-eye view coordinate system $X_{au}Y_{au}$ is a two-dimensional coordinate system having $X_{au}$ and $Y_{au}$ axes as its coordinate axes. The coordinates of a pixel in the bird's-eye view coordinate system $X_{au}Y_{au}$ are represented by $(x_{au}, y_{au})$. The bird's-eye view image is represented by the pixel signals of a plurality of pixels in a two-dimensional array, and the position of an individual pixel on the bird's-eye view image is represented by coordinates $(x_{au}, y_{au})$. The symbols $x_{au}$ and $y_{au}$ represent the $X_{au}$- and $Y_{au}$-axis components, respectively, in the bird's-eye view coordinate system $X_{au}Y_{au}$.

The bird's-eye view image is obtained by transforming the shot image as actually obtained by the shooting by the camera 1 to an image as seen from the viewpoint of a virtual camera (hereinafter referred to as the virtual viewpoint). More specifically, the bird's-eye view image is obtained by transforming the shot image to an image as seen when looking down to the ground surface in the plumb line direction. This kind of image transformation is also generally canted viewpoint transformation

The plane on which the two-dimensional ground surface coordinate system $X_wZ_w$ is defined and which coincides with the ground surface is parallel to the plane on which the bird's-eye view coordinate system $X_{au}Y_{au}$ is defined. Accordingly, projection from the two-dimensional ground surface coordinate system $X_wZ_w$ onto the bird's-eye view coordinate system $X_{au}Y_{au}$ of the virtual camera is achieved by parallel projection. Let the height of the virtual camera (that is, the height of the virtual viewpoint) be H. Then, the transformation formula between coordinates $(x_w, z_w)$ in the two-dimensional ground surface coordinate system $X_wZ_w$ and coordinates $(x_{au}, y_{au})$ in the bird's-eye view coordinate system $X_{au}Y_{au}$ is given by (4) below. The height H of the virtual camera is previously set. Furthermore, rearranging formula (4) gives formula (5) below.

[Formula 4]

$$\begin{bmatrix} x_{au} \\ y_{au} \end{bmatrix} = \frac{f}{H} \begin{bmatrix} x_w \\ z_w \end{bmatrix} \tag{4}$$

[Formula 5]

$$\begin{bmatrix} x_w \\ z_w \end{bmatrix} = \frac{H}{f} \begin{bmatrix} x_{au} \\ y_{au} \end{bmatrix} \tag{5}$$

Substituting the thus obtained formula, (5), in formula (3) above gives formula (6) below

[Formula 6]

$$\begin{bmatrix} x_{bu} \\ y_{bu} \end{bmatrix} = \begin{bmatrix} \dfrac{fHx_{au}}{fh\sin\theta + Hy_{au}\cos\theta} \\ \dfrac{f(fh\cos\theta - Hy_{au}\sin\theta)}{fh\sin\theta + Hy_{au}\cos\theta} \end{bmatrix} \tag{6}$$

Formula (6) above gives formula (7) below for transformation from coordinates ($x_{bu}$, $y_{bu}$) in the image-sensing plane S coordinate system $X_{bu}Y_{bu}$ to coordinates ($x_{au}$, $y_{au}$) in the bird's-eye view coordinate system $X_{au}Y_{au}$.

[Formula 7]

$$\begin{bmatrix} x_{au} \\ y_{au} \end{bmatrix} = \begin{bmatrix} \dfrac{x_{bu}(fh\sin\theta + Hy_{au}\cos\theta)}{fH} \\ \dfrac{fh(f\cos\theta - y_{bu}\sin\theta)}{H(f\sin\theta + y_{bu}\cos\theta)} \end{bmatrix} \tag{7}$$

Since coordinates ($x_{bu}$, $y_{bu}$) in the image-sensing plane S coordinate system $X_{bu}Y_{bu}$ are coordinates in the shot image, by use of formula (7) above, the shot image can be transformed to the bird's-eye view image.

Specifically, by transforming the coordinates ($x_{bu}$, $y_{bu}$) of the individual pixels of the shot image to coordinates ($x_{au}$, $y_{au}$) in the bird's-eye view coordinate system according to formula (7), it is possible to generate the bird's-eye view image. The bird's-eye view image is composed of pixels arrayed in the bird's-eye view coordinate system.

In practice, beforehand, according to formula (7), table data is created which indicates the correspondence between the coordinates ($x_{bu}$, $y_{bu}$) of the individual pixels on the shot image and the coordinates ($x_{au}$, $y_{au}$) of the individual pixels on the bird's-eye view image, and the table data is previously stored in an unillustrated memory (lookup table); then, by use of the table data, the shot image is transformed to the bird's-eye view image. Needless to say, the bird's-eye view image may instead be generated by performing coordinate transformation calculation based on formula (7) every time the shot image is acquired.

Examples 1 to 6 will now be described as practical examples to specifically explain how the driving assistance system in Fig. 1 operates. Unless inconsistent, any feature described with regard to one practical example is applicable to any other practical example.

<<Example 1>>

First, Example 1 will be described. The image processor 2 in Fig. 1 acquires shot images from the camera 1 at predetermined periods, and generates, from the shot images thus sequentially acquired, one display image after another to output the most recent display image to the display device 3. Thus, the display device 3 displays the most recent display image in a constantly updated fashion.

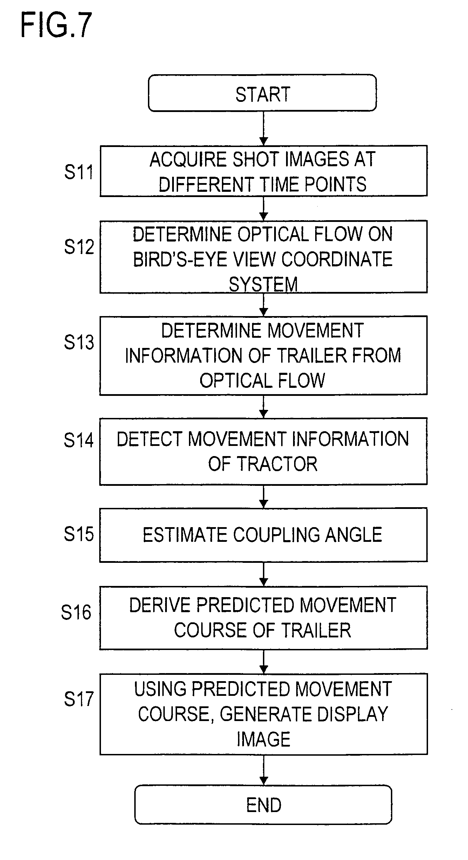

Now, with reference to Fig. 7, a flow of operation for generating one display image will be described. Fig. 7 is a flow chart showing a flow of such operation. The processing at steps S11 through S17 shown in Fig. 7 is executed by image processor 2 in Fig. 1.

To generate a display image according to, and characteristic of, the present invention, it is necessary to have a plurality of shot images shot at different time points. Accordingly, the image processor 2 acquires a plurality of shot images shot at different time points, and refers to those shot images in later processing (step S11). Assume now that the plurality of shot images thus acquired include a shot image obtained by shooting at time point t1 (hereinafter referred to simply as the shot image at time point t1) and a shot image obtained by shooting at time point t2 (hereinafter referred to simply as the shot image at time point t2). Here, it is assumed that time point t1 and time point t2 occur in this order. Assume also that, between time points t1 and t2, the articulated vehicle 10 moves. Accordingly, the viewpoint of the camera 1 differs between at time point t1 and at time point t2.

After the acquisition of the shot images at time points t1 and t2, at step S12, the optical flow between time points t1 and t2 is determined. It should be noted that the optical flow determined at step S12 is one on the bird's-eye view coordinate system.

Specifically, at step S12, the following processing is performed. The shot images at time points t1 and t2 are each transformed to a bird's-eye view image by the bird's-eye transformation described above. The bird's-eye view images based on the shot images at time points t1 and t2 are called the bird's-eye view images at time points t1 and t2 respectively. The bird's-eye view images at time points t1 and t2 are then compared with each other, and by use of a well-known block matching method or gradient method, the optical flow on the bird's-eye view coordinate system between time points t1 and t2 (in other words, the optical flow of the moving image composed of the bird's-eye view images at time points t1 and t2) is determined.

Instead, the following processing may be performed. The shot images at time points t1 and t2 are compared with each other, and by use of a well-known block matching method or gradient method, first, the optical flow on the coordinate system of the shot images is determined. This optical flow on the coordinate system of the shot images is then mapped onto the bird's-eye view coordinate system according to formula (7) above, eventually to determine the optical flow on the bird's-eye view coordinate system.

In the following description, it is assumed that what is referred to simply as an "optical flow" is an optical flow on the bird's-eye view coordinate system.

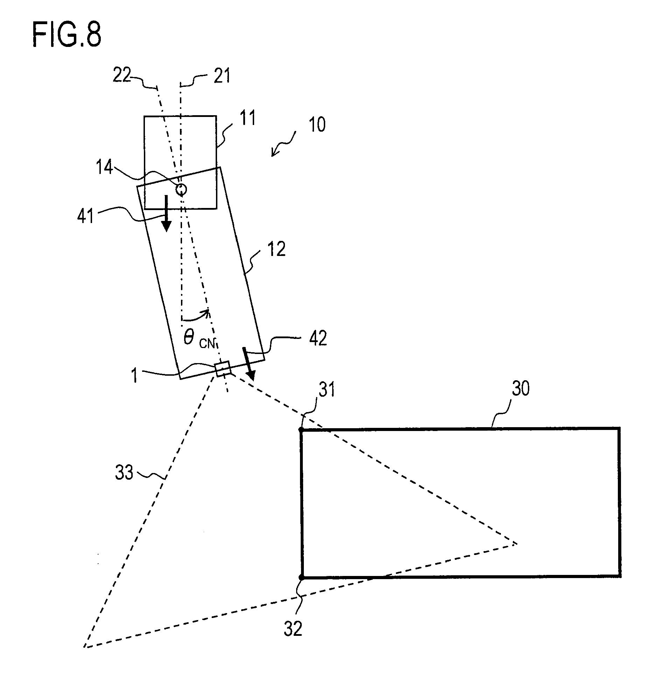

Now, for the sake of concrete description, consider a situation as shown in Fig. 8. Fig. 8 shows the articulated vehicle 10 along with the road surface around it as seen from above. On the road surface, behind the articulated vehicle 10, a rectangular parking space frame 30 in a parking area is drawn. Of the four vertices of the rectangular, the two which are located on the road surface comparatively close to the articulated vehicle 10 are referred to as the vertices 31 and 32 respectively. In Fig. 8, the broken-line triangle indicated by the reference sign 33 represents the field of view of the camera 1. It is here assumed that the field of view 33 covers the vertices 31 and 32 at both time points t1 and t2.

In the articulated vehicle 10, the movement direction of the trailer 12 depends on the movement direction of the tractor 11 and the coupling angle $\theta_{CN}$. The example taken up here is a case in which the coupling angle $\theta_{CN}$ is positive at time point t1 and the tractor 11 travels straight back between time points t1 and t2. In this case, between time points t1 and t2, the trailer 12 moves rearward, obliquely rightward. In Fig. 8, arrows 41 and 42 indicate the traveling direction of the tractor 11 and the trailer 12, respectively, between time points t1 and t2.

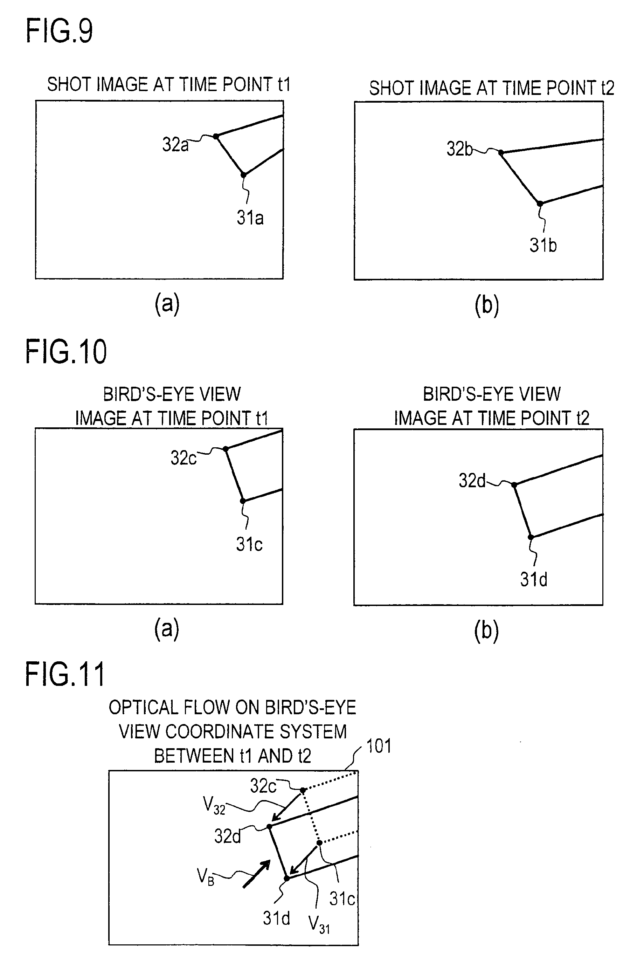

Fig. 9(a) shows the shot image at time point t1, and Fig. 9(b) shows the shot image at time point t2. In Fig. 9 (a), the reference signs 31a and 32a indicate the vertices 31 and 32, respectively, on the shot image at time point t1; in Fig. 9(b) the reference signs 31b and 32b indicate the vertices 31 and 32, respectively, on the shot image at time point t2.

Fig. 10(a) shows the bird's-eye view image at time point t1, and Fig. 10(b) shows the bird's-eye view image at time point t2. In Fig. 10(a), the reference signs 31c and 32c indicate the vertices 31 and 32, respectively, on the bird's-eye view image at time point t1; in Fig. 10(b) the reference signs 31d and 32d indicate the vertices 31 and 32, respectively, on the bird's-eye view image at time point t2.

Fig. 11 shows an image 101 having the two bird's-eye view images shown in Figs. 10(a) and (b) overlaid on each other. Suppose now that the vertices 31 and 32 in Fig. 8 are taken as a first and a second characteristic point respectively. In Fig. 11, an arrow $V_{31}$ represents the movement vector of the first characteristic point on the bird's-eye view coordinate system between time points t1 and t2, and an arrow $V_{32}$ represents the movement vector of the second characteristic point on the bird's-eye view coordinate system between time points t1 and t2. A movement vector is synonymous with a motion vector.

The movement vector $V_{31}$ is a vector representation of the displacement from the characteristic point 31c to the characteristic point 31d, and represents the direction and magnitude of the movement of the first characteristic point on the bird's-eye view coordinate system between time points t1 and t2. The movement vector $V_{32}$ is a vector representation of the displacement from the characteristic point 32c to the characteristic point 32d, and represents the direction and magnitude of the movement of the second characteristic point on the bird's-eye view coordinate system between time points t1 and t2.

An optical flow is a set of a plurality of movement vectors, and the optical flow determined at step S12 includes the movement vectors $V_{31}$ and $V_{32}$. The movement of a characteristic point on the bird's-eye view coordinate system results from the movement of the trailer 12 in the real space; in addition, the plane on which the bird's-eye view coordinate system is defined is parallel to the road surface; thus a vector having the opposite direction to the movement vectors $V_{31}$ and $V_{32}$ represents information on the movement (that is, movement information) of the trailer 12 between time points t1 and t2.

Subsequently to step S12, at step S13, this movement information on the trailer 12 is determined based on the optical flow. Specifically, the movement information is represented by a vector $V_B$ in Fig. 11. The vector $V_B$ is derived from the optical flow determined at step S12. The direction and magnitude of the vector $V_B$ represent the movement direction and movement amount of the trailer 12 on the bird's-eye view coordinate system between time points t1 and t2.

The vector $V_B$ is derived, for example, based on one movement vector of interest (for example, $V_{31}$ or $V_{32}$) included in the optical flow determined at step S12. In this case, the magnitude of the vector $V_B$ is made equal to the magnitude of the one movement vector of interest, and the direction of the vector $V_B$ is made opposite to the direction of the one movement vector of interest.

Alternatively, for example, the vector $V_B$ may be derived based on a plurality of movement vectors (for example, $V_{31}$ and $V_{32}$) included in the optical flow determined at step S12. In this case, the magnitude of the vector $V_B$ is made equal to the magnitude of the average vector of the plurality of movement vectors, and the direction of the vector $V_B$ is made opposite to the direction of the average vector of the plurality of movement vectors.

Subsequently to step S13, at step S14, the image processor 2 detects the movement information of the tractor 11 between time points t1 and t2. This movement information of the tractor 11 is obtained from a rudder angle sensor and a speed sensor (neither is illustrated) of which both are provided on the articulated vehicle 10. A rudder angle sensor is a sensor that detects the rudder angle of the tractor 11; a speed sensor is a sensor that detects the movement speed of the tractor 11.

The movement information of the tractor 11 includes the rudder angle of the tractor 11 between time points t1 and t2 as detected by the rudder angle sensor and the movement speed of the tractor 11 between time points t1 and t2 as detected by the speed sensor. Based on this movement information of the tractor 11 and the time difference $\Delta t$ between time points t1 and t2, the movement direction and movement amount of the tractor 11 in the real space between time points t1 and t2 are determined. The movement direction of the tractor 11 in the real space denotes the movement direction of the tractor 11 in the real space relative to the center line 21 in Fig. 5.

The image processor 2 transforms the vector representing the movement direction and movement amount of the tractor 11 in the real space to a vector $V_A$ on the bird's-eye view coordinate system. Since the plane on which the bird's-eye view coordinate system is defined is parallel to the road surface and the movement of the tractor 11 in the real space is across the road surface, based on the height H of the virtual camera and the like, the vector representing the movement direction and movement amount of the tractor 11 in the real space can be geometrically transformed to the vector $V_A$. The vector $V_A$ represents the movement direction and movement amount of the tractor 11 on the bird's-eye view coordinate system between time points t1 and t2.

In a time span arbitrarily taken as of interest, the movement direction and movement amount of the coupling 14 coincide with the movement direction and movement amount of the tractor 11; thus, determining the movement direction and movement amount of the tractor 11 and the coupling angle $\theta_{CN}$ determines the movement direction and movement amount of the trailer 12 in the time span of interest. That is, when the movement direction and movement amount of the tractor 11 are taken as a first variable, the movement direction and movement amount of the trailer 12 are taken as a second variable, and the coupling angle $\theta_{CN}$ is taken as a third variable, then determining two of the first to third variables determines the remaining one.

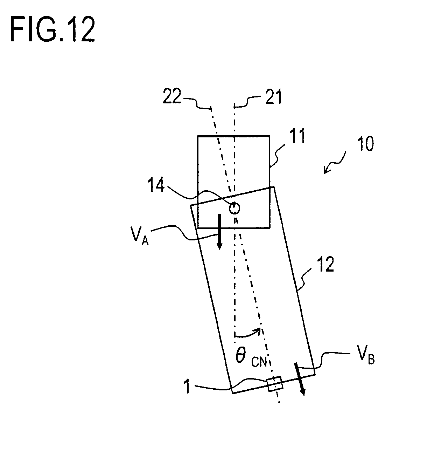

This relationship is exploited by the image processor 2: subsequently to step S14, at step S15, based on the movement information of the tractor 11 and the trailer 12 obtained at steps S14 and S13, the image processor 2 estimates the coupling angle $\theta_{CN}$ at the current moment. The coupling angle $\theta_{CN}$ at the current moment denotes the coupling angle at time point t2, or the coupling angle between time points t1 and t2. Fig. 12 shows a relationship between the vector $V_A$ corresponding to the movement information of the tractor 11 and the vector $V_B$ (see Fig. 11) corresponding to the movement information of the trailer 12. In a case where the tractor 11 travels straight back between time points t1 and t2, substituting the vectors $V_A$ and $V_B$ in formula (8) below determines the coupling angle $\theta_{CN}$.

[Formula 8]

$$\left| V_B \right| \cos \theta_{CN} = \left| V_A \right| \tag{8}$$

Precisely, the movement direction and movement amount of the trailer 12 depend, not only on the movement direction and movement amount of the tractor 11 and on the coupling angle $\theta_{CN}$, but also on the positional relationship between the coupling 14 and the wheels 13 (see Fig. 2) of the trailer 12, the shape of the trailer 12, etc. Preferably, therefore, with these relationships taken into consideration, the coupling angle $\theta_{CN}$ is determined geometrically. Since the positional relationship between the coupling 14 and the wheels 13 and the shape of the trailer 12 are prescribed, once the movement information of the tractor 11 and the trailer 12 is determined, the coupling angle $\theta_{CN}$ is determined uniquely. This means that the coupling angle $\theta_{CN}$ can be expressed as a function of the movement information of the tractor 11 and the trailer 12 (that is, the vectors $V_A$ and $V_B$). Preferably, therefore, for example, beforehand, based on the positional relationship between the coupling 14 and the wheels 13, the shape of the trailer 12, etc., a lookup table is created which when fed with the movement information of the tractor 11 and the trailer 12 returns the corresponding coupling angle $\theta_{CN}$, and the lookup table is previously stored within the image processor 2; then, at step S15, by use of the lookup table, the coupling angle $\theta_{CN}$ is estimated.

Once the rudder angle of the tractor 11 and the coupling angle $\theta_{CN}$ at a given time point are determined, it is possible to predict the movement course of the trailer 12 thereafter. Accordingly, subsequently to step S15, at step S16, based on the movement information of the tractor 11 detected at step S14 and the coupling angle $\theta_{CN}$ estimated at step S15, a predicted movement course of the trailer 12 is derived. The predicted movement course derived here is a course which the body of the trailer 12 is expected to travel on the bird's-eye view coordinate system after time point t2.

Precisely, the predicted movement course of the trailer 12 depends, not only on the rudder angle of the tractor 11 and on the coupling angle $\theta_{CN}$, but also on the positional relationship between the coupling 14 and the wheels 13 (see Fig. 2) of the trailer 12, the shape of the trailer 12, etc. Preferably, therefore, with these relationships taken into consideration, the predicted movement course is determined geometrically. Since the positional relationship between the coupling 14 and the wheels 13 and the shape of the trailer 12 are prescribed, once the rudder angle of the tractor 11 and the coupling angle $\theta_{CN}$ at a given time point are determined, the position of the body of the trailer 12 at that time point is determined uniquely. It is however necessary to take into consideration the fact that even when the rudder angle is held fixed, the coupling angle $\theta_{CN}$ changes constantly.

Specifically, for example, the predicted movement course is derived through three stages of processing, namely Processing 1 to 3, as described below.

Processing 1: For the purpose of deriving the predicted movement course, it is assumed that the tractor 11 continues to move while keeping the rudder angle and the movement speed as they are at the current moment even after time point t2. On this assumption, from the rudder angle of the tractor 11 and the coupling angle $\theta_{CN}$ as they are at the current moment, the coupling angles $\theta_{CN}$ at different time points in the future are estimated. A lookup table for this estimation may be previously created based on the positional relationship between the coupling 14 and the wheels 13, the shape of the trailer 12, etc. Instead, the lookup table may be created beforehand based on the actual results of road tests of the articulated vehicle 10. By feeding the lookup table with the rudder angle of the tractor 11 and the coupling angle $\theta_{CN}$ as they are at the current moment, the coupling angles $\theta_{CN}$ at different time points in the future (that is, the coupling angles $\theta_{CN}$ at different time points after time point t2) are estimated.

Processing 2: Based on the rudder angle at the current moment and on the coupling angles $\theta_{CN}$ at different time points in the future as estimated through Processing 1, the movement directions of the trailer 12 on the bird's-eye view coordinate system in different time spans in the future are estimated. A lookup table for this estimation too is previously created based on the positional relationship between the coupling 14 and the wheels 13, the shape of the trailer 12, etc.

Processing 3: Based on the movement directions of the trailer 12 on the bird's-eye view coordinate system, and the body positions of the trailer 12 on the bird's-eye view coordinate system, in different time spans in the future, a predicted movement course is derived. With the body position of the trailer 12 on the bird's-eye view coordinate system at time point t2 taken as a start point, by connecting together the movement directions of the trailer 12 in different time spans in the future, the predicted movement course is determined.

Subsequently to step S16, at step S17, the image processor 2 creates a display image that matches the predicted movement course determined at step S16. Specifically, the image processor 2 creates the display image by superimposing on the bird's-eye view image at time point t2 a vehicle guide line indicating a predicted movement course of the rear left corner of the body of the trailer 12 and a vehicle guide line indicating a predicted movement course of the rear right corner of the body of the trailer 12. The display image here too is, like bird's-eye view images, an image on the bird's-eye view coordinate system.

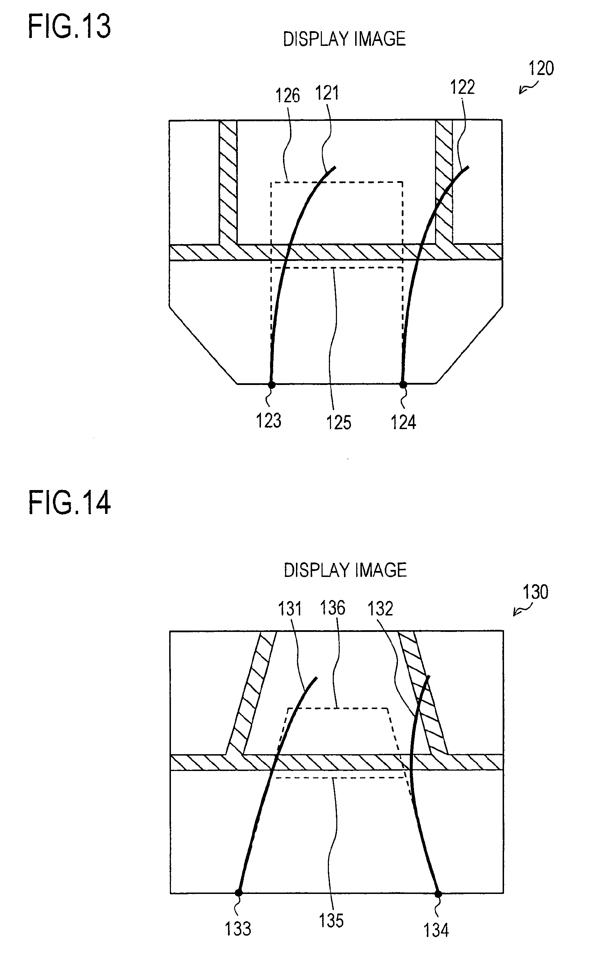

Fig. 13 shows an example of the display image. It should be noted that, although the exterior shape of bird's-eye view images are rectangular in Figs. 10(a) and (b), the exterior shape of bird's-eye view images may be other than rectangular. The exterior shape of the display image 120 shown in Fig. 13 is hexagonal. It should also be noted that it is for the sake of convenience of illustration that the display image 120 shown in Fig. 13 greatly differs from the bird's-eye view images shown in Figs. 10(a) and (b).

In the display image 120, hatching indicates the region where white lines are drawn as parking space frames. The display image 120 is obtained by superimposing the vehicle guide lines 121 and 122 on the bird's-eye view image based on the shot image. Points 123 and 124 correspond to the rear left and right corners of the trailer 12 on the bird's-eye view image, and the distance between the points 123 and 124 represents the vehicle width of the trailer 12 on the bird's-eye view image. The vehicle guide lines 121 and 122 are drawn starting at the points 123 and 124.

Also superimposed on the display image 120 are a first and a second distance line which indicate distances from the rear end of the trailer 12. In the display image 120, broken lines 125 and 126 extending in the lateral direction of the display image 120 are the first and second distance lines respectively. The first and second distance lines indicate, for example, distances of 1 m and 2 m, respectively, from the rear end of the trailer 12. Needless to say, a third distance line (and a fourth distance line, and so forth) may be additionally superimposed. A $Z_w$-axis-direction coordinate $Z_w$ in the two-dimensional ground surface coordinate system $X_w Z_w$ represents a distance from the rear end of the trailer 12, and therefore according to formula (4) or (5) above, the image processor 2 can determine the positions of the first and second distance lines on the display image. A broken line passing at the left ends of the broken lines 125 and 126 and at the point 123 and a broken line passing at the right ends of the broken lines 125 and 126 and at the point 124 correspond to extension lines of the left and right ends of the trailer 12.

The display image generated at step S17 is displayed on the display screen of the display device 3. On completion of the processing at step S17, a return is made to step S11 so that the processing at steps S11 through S17 is executed repeatedly to display the display image based on the most recent shot image on the display device 3 in a constantly updated fashion.

In the driving of the articulated vehicle 10, as compared with passenger cars and trucks, more skill is needed, and the direct rear view by sight is poorer; by displaying vehicle guide lines as in this practical example, however, it is possible to assist safe driving more satisfactorily. Moreover, such assistance can be achieved with a single camera, and thus it is possible to form a driving assistance system inexpensively. In this practical example, the display image is generated by superimposing additional information on a bird's-eye view image, and thus it is possible to offer to a driver an image which shows distances matched with actual distances and which thus permits easy grasping of the situation behind a vehicle.

<<Example 2>>

The movement information of the trailer 12 to be determined at step S13 in Fig. 7 is represented by the vector $V_B$ in Fig. 11, and determining the movement vector $V_{31}$ and/or $V_{32}$ makes it possible to derive the vector $V_B$. Accordingly, at steps S12 and S13 in Fig. 7, the following processing may instead be executed. This modified example of the processing at steps S12 and S13 will now be described as Example 2. In Example 2, the vector $V_B$ is derived through the processing for extracting and tracking characteristic points. This derivation method may be considered to be included in the method for deriving the vector $V_B$ described with regard to Example 1. Example 2 is implemented in combination with Example 1, and unless inconsistent, any feature described with regard to Example 1 applies to this practical example.

In Example 2, after the shot images at time points t1 and t2 are acquired at step S11, at step S12, characteristic points are extracted from the shot image at time point t1. A characteristic point is a point that is distinguishable from surrounding points and that is easy to track. Such a characteristic point can be extracted automatically by use of a well-known characteristic point extractor (unillustrated) that detects a pixel exhibiting a large variation in density in the horizontal and vertical directions. Examples of characteristic point extractors include the Harris corner detector and the SUSAN corner detector. The characteristic points to be extracted are, for example, intersections and end points of white lines drawn on the road surface, and smudges and cracks on the road surface; that is, they are assumed to be immobile points with no height on the road surface.

Then, at step S13 in Example 2, the processing for tracking characteristic points is performed. The processing for tracking characteristic points can be achieved by a well-known method. In a case where the shot image obtained by shooting at a given time point is taken as a first reference image and the shot image obtained by shooting at a time point later than that time point is taken as a second reference image, the tracking processing is achieved by comparing the first and second reference images with each other. More specifically, a region in the vicinity of the position of a characteristic point in the first reference image is taken as a characteristic point search region, and by performing image matching processing within a characteristic point search region in the second reference image, the position of a characteristic point in the second reference image is identified. In the image matching processing, for example, a template is formed in the image within a rectangular region centered about the position of a characteristic point in the first reference image, and the degree of similarity of that template to the image within a characteristic point search region in the second reference image is calculated. From the calculated degree of similarity, the position of a characteristic point in the second reference image is identified.

By performing the tracking processing with the shot images at time points t1 and t2 handled as a first and a second reference image respectively, the position of a characteristic point in the shot image at time point t2 is determined.

Suppose now that characteristic points 31a and 32a have been extracted from the shot image at time point t1 (see Fig. 9(a)), and that through the tracking processing the positions of characteristic points 31b and 32b in the shot image at time point t2 have been determined (see Fig. 9(b)). The image processor 2 transforms the shot images at time points t1 and t2 to the bird's-eye view images at time points t1 and t2 by bird's-eye transformation, and in addition maps the characteristic points 31 a, 32a, 31b, and 32b onto the bird's-eye view coordinate system according to formula (7) above to identify the positions of characteristic points 31c, 32c, 31d, and 32d on the bird's-eye view coordinate system. Once this identification is done, the movement vectors $V_{31}$ and $V_{32}$ are determined automatically, and thus based on the movement vectors $V_{31}$ and/or $V_{32}$, the vector $V_B$ can be derived.

Although the above example deals with a case in which the number of characteristic points extracted and tracked is two, since the vector $V_B$ can be derived when at least one of the movement vectors $V_{31}$ and $V_{32}$ is determined, the number of characteristic points to be extracted and tracked may be one.

Although the above example deals with a case in which the processing for extracting and tracking characteristic points is performed on the shot image, it may instead be performed on the bird's-eye view image. Specifically, in that case, after the shot images at time points t1 and t2 are transformed to the bird's-eye view images at time points t1 and t2 by bird's-eye transformation, by use of a characteristic point extractor, characteristic points 31c and 32c are extracted from the bird's-eye view image at time point t1 (see Fig. 10(a)). Thereafter, by performing the tracking processing with the bird's-eye view images at time points t1 and t2 handled as a first and a second reference image, the positions of characteristic points 31d and 32d in the bird's-eye view image at time point t2 are identified (see Fig. 10(b)).

<<Example 3>>

In Example 1, the display image is generated by superimposing vehicle guide lines on the bird's-eye view image. Since the bird's-eye view image is an image as seen when looking down to the ground surface from right above, it has the disadvantage of a narrow field of view. As an alternative, therefore, the display image may be generated by superimposing vehicle guide lines on an image other than the bird's-eye view image. This will now be described as Example 3. Specifically, for example, vehicle guide lines may be superimposed on the shot image as a source image, thereby to generate the display image. This makes it possible to offer an image with a wide field of view. Example 3 is implemented in combination with Example 1 or 2, and unless inconsistent, any feature described with regard to Example 1 or 2 applies to this practical example.

In Example 3, the vehicle guide lines determined through steps S11 through S16 in Fig. 7 are mapped onto the coordinate system of the shot image. This mapping is achieved through the inverse transformation of the coordinate transformation for transforming the shot image to the bird's-eye view image. For example, by inversely transforming the coordinates $(x_{au}, y_{au})$ of the individual pixels forming the vehicle guide lines on the bird's-eye view image to coordinates $(x_{bu}, y_{bu})$ on the shot image according to formula (7) above, the positions of the vehicle guide lines on the shot image are determined.

Fig. 14 shows an example of the display image in this practical example. The display image 130 shown in Fig. 14 is obtained by superimposing vehicle guide lines 131 and 132 onto the shot image at time point t2. It should be noted that, for the sake of convenience of illustration, the shot image at time point t2 corresponding to Fig. 14 differs from the shot image at time point t2 corresponding to Fig. 9(b). The vehicle guide lines 131 and 132 are the result of the vehicle guide lines 121 and 122 shown in Fig. 13 being mapped onto the coordinate system of the shot image. In the display image 130, hatching indicates the region where white lines are drawn as parking space frames. Points 133 and 134 correspond to the rear left and right corners of the trailer 12 on the shot image, and the distance between the points 133 and 134 represents the vehicle width of the trailer 12. The vehicle guide lines 131 and 132 are drawn starting at the points 133 and 134.

Also superimposed on the display image 130 are a first and a second distance line which indicate distances from the rear end of the trailer 12. Broken lines 135 and 136 extending in the lateral direction of the display image 130 are the first and second distance lines respectively, and these correspond to the result of the broken lines 125 and 126 in Fig. 13 being mapped onto the shot image. A broken line passing at the left ends of the broken lines 135 and 136 and at the point 133 and a broken line passing at the right ends of the broken lines 135 and 136 and at the point 134 correspond to extension lines of the left and right ends of the trailer 12.

<<Example 4>>

The method for generating the display image may be modified in many ways other than specifically described above. Example 4 will now be described as a practical example to describe modified examples of the method for generating the display image. In the description of Example 4, applied examples of other than the method for generating the display image will be mentioned as well. Example 4 is implemented in combination with Examples 1 to 3, and unless inconsistent, any feature described with regard to Examples 1 to 3 applies to this practical example. Although three patterns of modified processing, namely Modified Processing 1 to 3, are discussed separately below, two or more patterns of modified processing may be implemented in combination.

[Modified Processing 1]

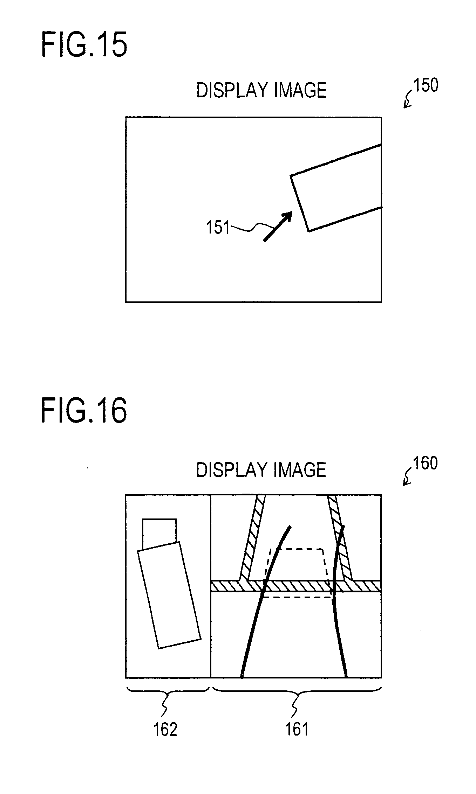

Instead of vehicle guide lines being superimposed on the shot image or bird's-eye view image, a sign indicating the movement direction (traveling direction) of the trailer 12 may be superimposed on the shot image or bird's-eye view image, thereby to generate the display image. Fig. 15 shows an example of such a display image. The display image 150 in Fig. 15 is an image obtained by superimposing on the bird's-eye view image at time point t2 shown in Fig. 10(b) an arrow 151 as a sign indicating the movement direction of the trailer 12. The direction of the arrow 151 coincides with the direction of the vector $V_B$ shown in Fig. 11.

In a case where the display image is generated by superimposing a sign indicating the movement direction of the trailer 12 not on the bird's-eye view image but on the shot image, preferably, the vector $V_B$ on the bird's-eye view coordinate system is transformed to a vector on the coordinate system of the shot image through the inverse transformation mentioned with regard to Example 3, and an arrow whose direction coincides with the direction of the thus obtained vector is superimposed on the shot image at time point t2 shown in Fig. 9(b), thereby to generate the display image.

A sign indicating the movement direction of the trailer 12 and vehicle guide lines may both be superimposed on the shot image or bird's-eye view image, thereby to generate the display image.

[Modified Processing 2]

The result of the estimation of the coupling angle $\theta_{CN}$ at step S15 in Fig. 7 may be reflected in the display image. How it is reflected in it is arbitrary. Consider a case where the coupling angle $\theta_{CN}$ has been estimated based on the shot images at time points t1 and t2. In this case, for example, a value indicating the coupling angle $\theta_{CN}$ is superimposed on the shot image at time point t2 or on the bird's-eye view image at time point t2, thereby to generate the display image. On this display image, a sign indicating the movement direction of the trailer 12 and/or vehicle guide lines may additionally be superimposed.

The display image may instead be so generated that the shot image or bird's-eye view image at time point t2 and an illustration indicating the coupling angle $\theta_{CN}$ are displayed side by side on the display screen. Fig. 16 shows an example of such a display image. The display image 160 in Fig. 16 is divided into two regions 161 and 162. In the region 161 is shown the same image as the display image 130 shown in Fig. 14 (or an image obtained by compressing the display image 130 in the lateral direction), and in the region 162 is shown an illustration indicating the coupling angle $\theta_{CN}$ as most recently estimated. This illustration contains a picture of the articulated vehicle composed of the tractor and the trailer, and according to the coupling angle $\theta_{CN}$, the coupling angle of the tractor and the trailer on the illustration varies.

[Modified Processing 3]

When the coupling angle $\theta_{CN}$ is equal to or larger than a predetermined angle, there is a risk of overturning or the like. Accordingly, depending on the coupling angle $\theta_{CN}$, a warning may be indicated. Specifically, this is achieved through processing as follows. The driving assistance system (for example, the image processor 2) compares the coupling angle $\theta_{CN}$ estimated at step S15 in Fig. 7 with a predetermined threshold angle, and when the former is equal to or larger than the latter, gives an indication to notify the driver of the articulated vehicle 10 that the coupling angle $\theta_{CN}$ is excessively large. This indication may be by means of an image by use of the display device 3, or by means of a sound by use of an unillustrated speaker. Since the proper threshold angle varies with the sizes of the bodies of the tractor 11 and the trailer 12 etc., preferably, the threshold angle is changed according to the type etc. of the articulated vehicle 10.

<<Example 5>>

With regard to Example 1, a method for deriving a predicted movement course of the trailer 12 was described. A modified example of the derivation method (that is, a modified example of the processing at step S16 in Fig. 7) will now be described as Example 5. Example 5 is implemented in combination with Example 1, or with one of Examples 2 to 4. Discussed below will be the processing after the shot images at time points t1 and t2 have been acquired and the processing at steps S11 through S15 in Fig. 7 has been executed as described with regard to Example 1.

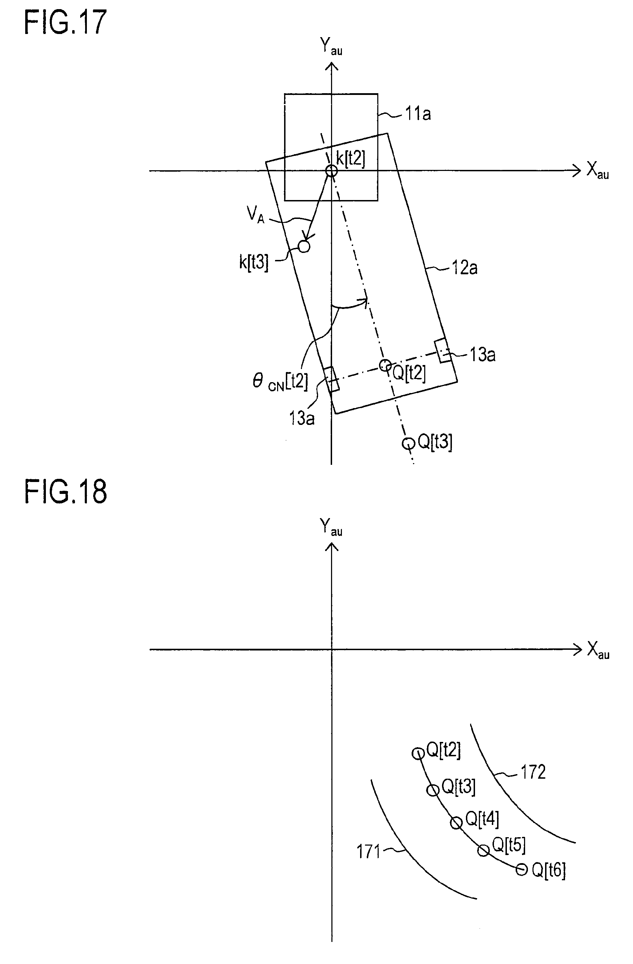

Fig. 17 shows the bird's-eye view coordinate system having $X_{au}$ and $Y_{au}$ axes as its coordinate axes. Fig. 17 also shows figures obtained by projecting the articulated vehicle 10 onto the bird's-eye view coordinate system. In Fig. 17, the reference signs 11a, 12a, and 13a indicate the figures obtained by projecting the tractor 11, the trailer 12, and the wheels 13, respectively, in Fig. 2 onto the bird's-eye view coordinate system. The center of the axle of the two wheels 13 provided on the trailer 12 will be represented by Q. The axle of the two wheels 13 is perpendicular to the center line 22 in Fig. 5, and the axle center Q lies on the center line 22.

Take now the position of the coupling 14 at time point t2 on the bird's-eye view coordinate system as the origin, and assume that the center line 21 (see Fig. 5) of the tractor 11 at time point t2 on the bird's-eye view coordinate system lies on $Y_{au}$ axis. Moreover, consider time points t1, t2, t3, t4, ... sampled at time intervals of $\Delta t$, and assume that time points t1, t2, t3, t4, ... occur in this order. The position of the coupling 14 at time point ti on the bird's-eye view coordinate system is represented by k[ti] (where i is a natural number).

In deriving the predicted movement course, it is assumed that the tractor 11 continues to move while keeping the rudder angle and the movement speed as they are at the current moment even after time point t2. Then, the vector representing the movement direction and movement amount of the tractor 11 on the bird's-eye view coordinate system between time points t2 and t3 coincides with the vector $V_A$ between time points t1 and t2 mentioned with regard to Example 1. Accordingly, from the vector $V_A$, the position k[t3] of the coupling 14 at time point t3 on the bird's-eye view coordinate system can be determined. Specifically, the position of the end point of the vector $V_A$ when it is arranged on the bird's-eye view coordinate system with its start point placed at the position k[t2] of the coupling 14 at time point t2 is taken as the position k[t3]. It is here assumed that, once the rudder angle of the tractor 11 between time points t1 and t2 is determined, the direction of the vector $V_A$ on the bird's-eye view coordinate system is determined.

The coupling angle $\theta_{CN}$ at time point ti is represented by $\theta_{CN}[ti]$ (where i is a natural number). Furthermore, the position of the axle center Q at time point ti on the bird's-eye view coordinate system is represented by Q[ti] (where i is a natural number). The coupling angle $\theta_{CN}[t2]$ at time point t2 has been estimated at step S15 in Fig. 7, and by use of this coupling angle $\theta_{CN}[t2]$, the image processor 2 determines the position Q[t2]. More specifically, it determines the position Q[t2] based on the coupling angle $\theta_{CN}[t2]$, the position k[t2], and already known body information of the trailer 12. The body information of the trailer 12 identifies the distance from the coupling 14 to the axle center Q on the bird's-eye view coordinate system.

Thereafter, the image processor 2 estimates the position Q[t3] of the axle center Q at time point t3 on the bird's-eye view coordinate system such that the following two conditions, namely a first and a second, are both fulfilled (refer to Japan Automobile Standards, JASO Z 006-92, page 18).

The first condition is: "the distance between the position k[t2] and the position Q[t2] is equal to the distance between the position k[t3] and the position Q[t3].

The second condition is: "the position Q[t3] lies on the line connecting between the position k[t2] and the position Q[t2].

Furthermore, from the estimated position Q[t3] and the position k[t3], the image processor 2 estimates the coupling angle $\theta_{CN}[t3]$ at time point t3. Specifically, it estimates as the coupling angle $\theta_{CN}[t3]$ the angle formed by the straight line passing through the position k[t3] and parallel to $Y_{au}$ axis and the straight line connecting between the position k[t3] and the position Q[t3].

In the manner described above, on the basis of "k[t2], Q[t2], and $\theta_{CN}[t2]$," "k[t3], Q[t3], and $\theta_{CN}[t3]$" are derived. When this derivation method is applied on the basis of "k[t3], Q[t3], and $\theta_{CN}[t3]$," "k[t4], Q[t4], and $\theta_{CN}[t4]$" are determined. By executing this repeatedly, "k[t5], Q[t5], and $\theta_{CN}[t5]$," "k[t6], Q[t6], and $\theta_{CN}[t6]$," and so forth are determined sequentially.

Fig. 18 is a plotting of the positions Q[t2] to Q[t6] of the axle center Q at time points t2 to t6. The locus through Q[t2] to Q[t6] is the predicted movement course of the axle center Q on the bird's-eye view coordinate system. When the positions of the axle center Q at different time points are determined, then based on the vehicle width of the trailer 12 on the bird's-eye view coordinate system, the positions of the rear left and right corners of the body of the trailer 12 at those time points can be determined. Curved lines 171 and 172 in Fig. 18 are the predicted movement courses of the rear left and right corners of the body of the trailer 12 after time point t2. These predicted movement courses are derived at step S16 in Fig. 7.

For example, the display image 120 in Fig. 13 is generated by superimposing vehicle guide lines 121 and 122 along those curved lines 171 and 172 on the bird's-eye view image at time point t2.

<<Example 6>>

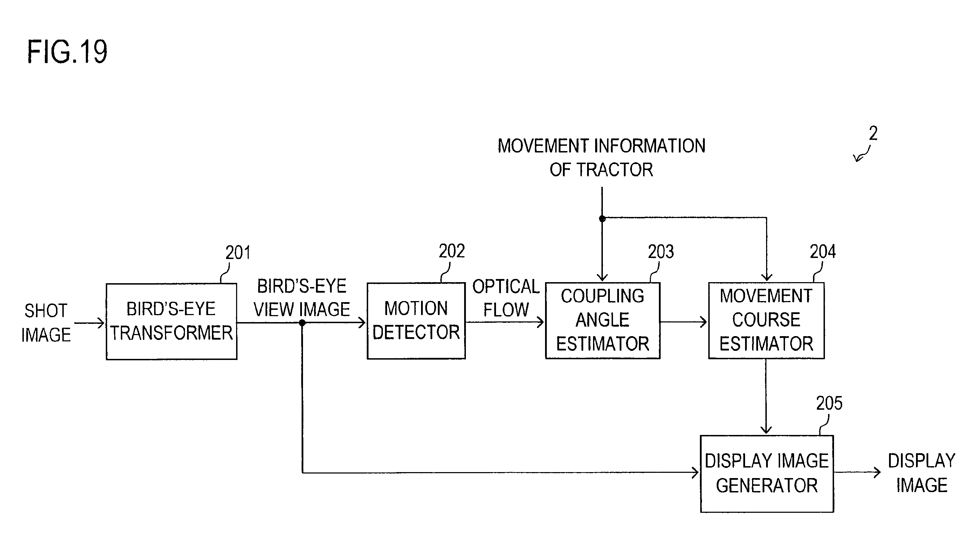

Next, Example 6 will be described. Presented as Example 6 will be exemplary functional block diagrams of the image processor 2 in Fig. 1. Fig. 19 is a functional block diagram of the image processor 2 corresponding to Example 1. Within the image processor 2 in Fig. 19, the processing at the different steps shown in Fig. 7 is executed. The image processor 2 in Fig. 19 is provided with blocks identified by the reference signs 201 to 205.

The shot images at time points t1 and t2 acquired at step S11 in Fig. 7 are fed to a bird's-eye transformer 201. The bird's-eye transformer 201 transforms the shot images at time points t1 and t2 to the bird's-eye view images at time points t1 and t2 by bird's-eye transformation. A motion detector 202 compares with each other the bird's-eye view images at time points t1 and t2 resulting from the transformation, thereby to derive the optical flow on the bird's-eye view coordinate system between time points t1 and t2 (step S12). Based on this optical flow, and on the movement information of the tractor 11 fed to it, a coupling angle estimator 203 estimates the coupling angle $\theta_{CN}$ (step S15). The processing at steps S13 and S14 in Fig. 7 is achieved by the motion detector 202, or the coupling angle estimator 203, or another block within the image processor 2.

Based on the coupling angle $\theta_{CN}$ estimated by the coupling angle estimator 203, and on the movement information of the tractor 11, a movement course estimator 204 executes the processing at step S16 in Fig. 7, thereby to determine the predicted movement course of the trailer 12. By superimposing vehicle guide lines based on the result of the estimation on the bird's-eye view image at time point t2, a display image generator 205 generates the display image at time point t2.

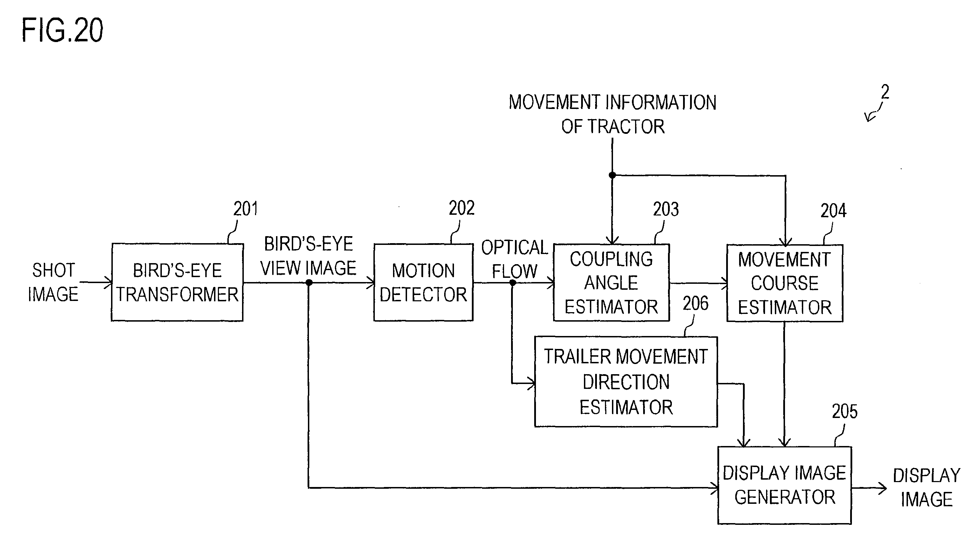

In a case where, as in Modified Processing 1 in Example 4 described above, a sign indicating the movement direction of the trailer 12 is superimposed on the shot image or bird's-eye view image, the functional block diagram of Fig. 19 is modified as shown in Fig. 20. Fig. 20 additionally shows a trailer movement direction estimator 206, which also is provided, along with the blocks identified by the reference signs 201 to 205, within the image processor 2. By executing the processing at step S13 in Fig. 7 by use of the optical flow from the motion detector 202, the trailer movement direction estimator 206 determines the vector $V_B$ in Fig. 11 which represents the movement direction of the trailer 12. In this case, by use of this vector $V_B$, the display image generator 205 generates the display image 150 in Fig. 15.

<<Modifications and Variations>>

In connection with the practical examples described above, modified examples of or supplementary explanations applicable to them will be given below in Notes 1 to 4. Unless inconsistent, any part of the contents of these notes may be combined with any other.

[Note 1]

The coordinate transform described above for generating a bird's-eye view image from a shot image is generally called perspective projection transformation. Instead of perspective projection transformation, well-known planar projection transformation may be used to generate a bird's-eye view image from a shot image. In a case where planar projection transformation is used, a homography matrix (coordinate transformation matrix) for transforming the coordinates of the individual pixels on a shot image to the coordinates of the individual pixels on a bird's-eye view image is determined previously at the stage of camera calibration processing. The homograpy matrix is determined by a known method. Then, when the operation shown in Fig. 7 is performed, based on the homograpy matrix, a shot image is transformed to a bird's-eye view image. In any case, a shot image is transformed to a bird's-eye view image by projecting the shot image onto the bird's-eye view coordinate system.

[Note 2]

In the practical examples described above, a display image based on the shot image obtained from a single camera is displayed on the display device 3; instead, in a case where the articulated vehicle 10 is fitted with a plurality of cameras (unillustrated), the display image may be generated based on a plurality of shot images obtained from the plurality of cameras. For example, in addition to the camera 1, one or more other cameras are installed on the articulated vehicle 10, and an image based on the shot images from the other cameras and an image based on the shot image from the camera 1 are synthesized; it is then possible to take the resulting synthesized image as the display image eventually fed to the display device 3. The thus synthesized image is, for example, an all-around bird's-eye view image as described in JP-A-2006-287892.

[Note 3]

In the practical examples described above, a driving assistance system embodying the present invention is applied to an articulated vehicle 10 composed of a tractor 11 and a trailer 12 (see Fig. 2). The application of driving assistance systems embodying the invention, however, is not limited to articulated vehicles composed of a tractor and a trailer. Driving assistance systems embodying the invention are applicable to any articulated vehicles composed of a first vehicle and a second vehicle coupled to and towed by the first vehicle. In the practical examples described above, the first vehicle is exemplified by the tractor 11 and the second vehicle is exemplified by the trailer 12. Although the articulated vehicle 10 in Fig. 1 is a large articulated vehicle for transporting steel products and heavy loads, the present invention does not depend on the size of articulated vehicles.

Articulated vehicles to which the present invention is applicable include vehicles generally called towing/towed automobiles (or, articulated vehicles themselves are towing/towed automobiles). For further example, articulated vehicles to which the present invention is applicable include articulated buses (coupled buses), connected buses, and tram buses, all composed of a first vehicle and a second vehicle. For example, in a case where a driving assistance system embodying the present invention is applied to an articulated bus, with a first and a second vehicle of the articulated bus regarded as the tractor 11 and the trailer 12 described above, the processing described above can be performed. The present invention can be applied even to articulated vehicles classified as SUVs (sports utility vehicles).

[Note 4]

The image processor 2 in Fig. 1 can be realized in hardware, in software, or in a combination of hardware and software. All or part of the functions realized by the image processor 2 in Fig.1 may be prepared in the form of a software program so that this software program is executed on a computer to realize all or part of those functions.

**Claims**

1.  A driving assistance system including a camera provided, in an articulated vehicle composed of a first vehicle and a second vehicle coupled to the first vehicle, on the second vehicle to shoot behind the second vehicle, the driving assistance system acquiring a plurality of chronologically ordered shot images from the camera and outputting a display image generated from the shot images to a display device,
    **characterized by** the provision of:

    a motion detecting portion which derives an optical flow of a moving image formed by the plurality of shot images;
    a coupling angle estimating portion which estimates a coupling angle of the first and second vehicles based on the optical flow and on movement information of the first vehicle fed to the coupling angle estimating portion; and
    a movement course estimating portion which derives a predicted movement course of the second vehicle based on the coupling angle and on the movement information of the first vehicle,
    the display image being generated by superimposing a sign based on the predicted movement course on an image based on the shot images.

2.  The driving assistance system according to claim 1, further **characterized by** the provision of:

    a coordinate transforming portion which transforms the plurality of shot images to a plurality of bird's-eye view images by projecting the shot images onto a predetermined bird's-eye view coordinate system,
    the optical flow derived by the motion detecting portion being an optical flow on the bird's-eye view coordinate system.

3.  The driving assistance system according to claim 2, further **characterized in that**
    the movement information of the first vehicle includes information representing a movement direction and a movement speed of the first vehicle, and
    the coupling angle estimating portion derives a vector representing the movement direction and a movement amount of the first vehicle on the bird's-eye view coordinate system based on the movement information of the first vehicle, and estimates the coupling angle based on the vector and on the optical flow.

4.  The driving assistance system according to claim 1, further **characterized by** the provision of:

    an indicating portion which gives, to outside, an indication according to a result of comparison of the estimated coupling angle with a predetermined threshold angle.

5.  A driving assistance system including a camera provided, in an articulated vehicle composed of a first vehicle and a second vehicle coupled to the first vehicle, on the second vehicle to shoot behind the second vehicle, the driving assistance system acquiring a plurality of chronologically ordered shot images from the camera and outputting a display image generated from the shot images to a display device,
    **characterized by** the provision of:

    a motion detecting portion which derives an optical flow of a moving image formed by the plurality of shot images; and
    a movement direction estimating portion which estimates a movement direction of the second vehicle based on the optical flow,
    a result of estimation by the movement direction estimating portion being reflected in the display image.

6.  The driving assistance system according to claim 5, further **characterized by** the provision of:

    a coordinate transforming portion which transforms the plurality of shot images to a plurality of bird's-eye view images by projecting the shot images onto a predetermined bird's-eye view coordinate system,
    the optical flow derived by the motion detecting portion being an optical flow on the bird's-eye view coordinate system.

7.  The driving assistance system according to claim 6, further **characterized by** the provision of:

    a coupling angle estimating portion which estimates a coupling angle of the first and second vehicles based on the optical flow and on movement information of the first vehicle fed to the coupling angle estimating portion,

a result of estimation of the coupling angle being reflected in the display image.

8. The driving assistance system according to claim 7, further **characterized in that**
the movement information of the first vehicle includes information representing a movement direction and a movement speed of the first vehicle, and
the coupling angle estimating portion derives a vector representing the movement direction and a movement amount of the first vehicle on the bird's-eye view coordinate system based on the movement information of the first vehicle, and estimates the coupling angle based on the vector and on the optical flow.

9. The driving assistance system according to claim 7, further **characterized by** the provision of:

an indicating portion which gives, to outside, an indication according to a result of comparison of the estimated coupling angle with a predetermined threshold angle.

10. An articulated vehicle **characterized by** being composed of a first vehicle and a second vehicle coupled to the first vehicle, and being provided with the driving assistance system of any one of claims 1 to 9.

# FIG.1

```
   1                    2                   3
┌──────────┐      ┌──────────┐      ┌──────────┐
│          │      │  IMAGE   │      │ DISPLAY  │
│  CAMERA  │ ───▶ │PROCESSOR │ ───▶ │  DEVICE  │
│          │      │          │      │          │
└──────────┘      └──────────┘      └──────────┘
```

# FIG.2

# FIG.3

## FIG.4

## FIG.5

$\theta_{CN}$

FIG.6

# FIG.7

```
              ┌─────────────────────┐
              │        START        │
              └─────────────────────┘
                         │
                         ▼
        ┌──────────────────────────────────┐
   S11  │   ACQUIRE SHOT IMAGES AT          │
        │   DIFFERENT TIME POINTS           │
        └──────────────────────────────────┘
                         │
                         ▼
        ┌──────────────────────────────────┐
   S12  │   DETERMINE OPTICAL FLOW ON       │
        │   BIRD'S-EYE VIEW COORDINATE      │
        │   SYSTEM                          │
        └──────────────────────────────────┘
                         │
                         ▼
        ┌──────────────────────────────────┐
   S13  │   DETERMINE MOVEMENT              │
        │   INFORMATION OF TRAILER FROM     │
        │   OPTICAL FLOW                    │
        └──────────────────────────────────┘
                         │
                         ▼
        ┌──────────────────────────────────┐
   S14  │   DETECT MOVEMENT INFORMATION     │
        │   OF TRACTOR                      │
        └──────────────────────────────────┘
                         │
                         ▼
        ┌──────────────────────────────────┐
   S15  │   ESTIMATE COUPLING ANGLE         │
        └──────────────────────────────────┘
                         │
                         ▼
        ┌──────────────────────────────────┐
   S16  │   DERIVE PREDICTED MOVEMENT       │
        │   COURSE OF TRAILER               │
        └──────────────────────────────────┘
                         │
                         ▼
        ┌──────────────────────────────────┐
   S17  │   USING PREDICTED MOVEMENT        │
        │   COURSE, GENERATE DISPLAY        │
        │   IMAGE                           │
        └──────────────────────────────────┘
                         │
                         ▼
              ┌─────────────────────┐
              │         END         │
              └─────────────────────┘
```

# FIG.8

# FIG.9

SHOT IMAGE AT TIME POINT t1

32a

31a

(a)

SHOT IMAGE AT TIME POINT t2

32b

31b

(b)

# FIG.10

BIRD'S-EYE VIEW
IMAGE AT TIME POINT t1

32c

31c

(a)

BIRD'S-EYE VIEW
IMAGE AT TIME POINT t2

32d

31d

(b)

# FIG.11

OPTICAL FLOW ON BIRD'S-EYE
VIEW COORDINATE SYSTEM
BETWEEN t1 AND t2

101

32c

$V_{32}$

32d

$V_B$

31d   $V_{31}$   31c

FIG.12

FIG.13

DISPLAY IMAGE

120

126  121          122

123     125     124

FIG.14

DISPLAY IMAGE

130

131  136  132

133     135     134

# FIG.15

DISPLAY IMAGE 150

151

# FIG.16

DISPLAY IMAGE 160

162 161

FIG.17

FIG.18

## FIG.19

EP 2 181 898 A1

# FIG.20

EP 2 181 898 A1

## INTERNATIONAL SEARCH REPORT

| | International application No. |
|---|---|
| | PCT/JP2008/064723 |

A. CLASSIFICATION OF SUBJECT MATTER
*B60R21/00*(2006.01)i, *B60R1/00*(2006.01)i, *G06T1/00*(2006.01)i, *G06T7/20*
(2006.01)i, *H04N7/18*(2006.01)i

According to International Patent Classification (IPC) or to both national classification and IPC

B. FIELDS SEARCHED

Minimum documentation searched (classification system followed by classification symbols)
B60R21/00, B60R1/00, G06T1/00, G06T7/20, H04N7/18

Documentation searched other than minimum documentation to the extent that such documents are included in the fields searched
Jitsuyo Shinan Koho          1922-1996     Jitsuyo Shinan Toroku Koho     1996-2008
Kokai Jitsuyo Shinan Koho    1971-2008     Toroku Jitsuyo Shinan Koho     1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-95045 A   (Mekra Lang GmbH & Co. KG.),<br>03 April, 2003 (03.04.03),<br>Par. Nos. [0033] to [0036]; Fig. 1<br>& US 2003-0025596 A1     & EP 01273478 A2<br>& DE 001010339 U1         & BR 000202330 A<br>& CN 001393358 A | 5,6,10<br>1-4,7-9 |
| Y<br>A | JP 2004-252837 A   (Denso Corp.),<br>09 September, 2004 (09.09.04),<br>Par. Nos. [0025], [0028], [0041]<br>(Family: none) | 5,6,10<br>1-4,7-9 |
| A | JP 2006-256544 A   (Aisin Seiki Co., Ltd.),<br>28 September, 2006 (28.09.06),<br>Par. Nos. [0018] to [0021]; Figs. 3 to 6<br>(Family: none) | 1-10 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>10 September, 2008 (10.09.08) | Date of mailing of the international search report<br>22 September, 2008 (22.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

EP 2 181 898 A1

INTERNATIONAL SEARCH REPORT

International application No.

PCT/JP2008/064723

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-211559 A  (Robert Bosch GmbH), 02 August, 2000 (02.08.00), Claim 1 & US 006446998 B1        & GB 02346495 A & DE 019901953 A         & FR 002788612 A | 1-10 |

Form PCT/ISA/210 (continuation of second sheet) (April 2007)

32

**EP 2 181 898 A1**

**REFERENCES CITED IN THE DESCRIPTION**

**Patent documents cited in the description**

- JP 2006256544 A
- JP 2006287892 A